# EUROPEAN PATENT APPLICATION

(11) **EP 4 837 687 A1**
(43) Date of publication of application: **11.11.2026**
(21) Application number: 24932129.0
(22) Date of filing: 11.12.2024
(51) Int. Cl.: B23K 11/24, B23K 11/11

(54) **METHOD FOR MANUFACTURING RESISTANCE SPOT WELDING JOINT**

(30) Priority: 25.03.2024 JP 2024048533
(71) Applicant: JFE Steel Corporation, Tokyo 100-0011 (JP)
(72) Inventor: MUNEMURA, Naoaki, Tokyo 100-0011 (JP); TANIGUCHI, Koichi, Tokyo 100-0011 (JP); SAWANISHI, Chikaumi, Tokyo 100-0011 (JP)
(74) Representative: Hoffmann Eitle
(86) International application number: PCT/JP2024/043900
(87) International publication number: WO 2025/203912

(57) **Abstract**

The present disclosure provides a method of producing a resistance spot welded joint with superior nugget diameter stability. In test welding, preliminary current passage and main current passage are performed by constant current control in two or more patterns, preliminary current passage is performed under the same current passage condition and an electrode force of less than 2.5 kN, an electrical property between electrodes in the preliminary current passage and a time variation curve of an instantaneous amount of heat generated per unit volume during the main current passage are stored, in actual welding, preliminary current passage is performed by constant current control under the same current passage condition as in the preliminary current passage of the test welding, a target in main current passage in the actual welding is set by a comparison of an electrical property between the electrodes in the preliminary current passages, and adaptive control welding is performed to control a current passage amount as the main current passage.

## Description

### TECHNICAL FIELD

The present disclosure relates to a method of producing a resistance spot welded joint.

### BACKGROUND

Generally, resistance spot welding, a type of lap resistance welding method, is used to join overlapping metal sheets, such as overlapping steel sheets. This welding method is a method in which two or more overlapping metal sheets that are parts to be welded are squeezed by a pair of electrodes from above and below and pressed, and a high welding current is applied for a short time between the upper and lower electrodes to join the metal sheets. In this welding method, a spot-shaped welded portion is obtained using the resistance heat generated by passing the high welding current. The spot-shaped welded portion is called a nugget. The nugget is the portion where the two metal sheets melt and solidify at the contact point of the metal sheets when the electric current flows through the overlapped metal sheets. The metal sheets are spot-welded by the nugget.

To obtain good quality of the welded portion, it is important to form a nugget with a diameter in an appropriate range. Hereafter, the diameter of the nugget is also be referred to as the nugget diameter. The nugget diameter is determined by the current passage conditions, such as the electrode force, welding current, and welding time. Therefore, in order to obtain a nugget diameter within an appropriate range, it is necessary to set the above current passage conditions appropriately according to the conditions of the parts to be welded, such as the material properties, sheet thickness, and number of layers.

For example, in the production of automobiles, thousands of resistance spot welds are applied to a single vehicle. Furthermore, it is necessary to weld parts to be welded (workpieces) that are conveyed sequentially. If the state of the parts to be welded such as the material properties, the sheet thickness, and the number of overlapping sheets is the same at each welding location, the same current passage conditions such as electrode force, welding current, and welding time can be used to obtain the same nugget diameter.

However, in a case in which there is a disturbance during welding, such as when a spot that has already been welded (existing weld) is present near the current welding point or when the parts to be welded have considerable surface roughness and a contact point of the parts to be welded is present near the welding point, the current is shunted into such an existing weld or contact point during welding. In this state, even when welding is performed under predetermined conditions, the current density at the position to be welded directly below the electrode decreases. The required nugget diameter therefore cannot be obtained. To compensate for such an insufficient amount of heat generated and obtain the required nugget diameter, a higher welding current needs to be set beforehand.

Furthermore, if the area around the spot to be welded is strongly constrained due to surface irregularities or the shape of the parts to be welded, or if foreign matter is caught between the metal sheets around the welding spot, the sheet gap between the metal sheets will increase. This may narrow the contact area between the metal sheets and increase the likelihood of expulsion (splash).

### CITATION LIST

### Patent Literature

PTL 1: WO 2019/035367 A1

### SUMMARY

### (Technical Problem)

To address the above problem, we previously developed and disclosed, in PTL 1,
"A resistance spot welding method of squeezing, by a pair of electrodes, parts to be welded which are a plurality of overlapping metal sheets, and passing a current while applying an electrode force to join the parts to be welded, the resistance spot welding method comprising:
performing test welding; and
performing actual welding after the test welding, wherein
the test welding is performed under each of two or more welding conditions,
in the test welding, for each of the welding conditions,
   preliminary current passage is performed by constant current control in a same current pattern, and an electrical property between the electrodes in the preliminary current passage is stored,
   thereafter main current passage is performed by constant current control, and a time variation curve of an instantaneous amount of heat generated per unit volume and a cumulative amount of heat generated per unit volume that are calculated from an electrical property between the electrodes in forming an appropriate nugget are stored, and
in the actual welding:
   preliminary current passage is performed by constant current control in the same current pattern as in the test welding, an electrical property between the electrodes in the preliminary current passage and an electrical property between the electrodes stored in the preliminary current passage of the test welding are compared for each of the welding conditions, and a time variation curve of an instantaneous amount of heat generated per unit volume and a cumulative amount of heat generated per unit volume in the main current passage of the test welding that are stored for a welding condition corresponding to a smallest difference in electrical property are set as a target in main current passage in the actual welding, and
   thereafter adaptive control welding is performed to control a current passage amount according to the target, as the main current passage".

The technique described in PTL 1 makes it possible to obtain a nugget diameter within an appropriate range without expulsion (splash), even when disturbances are present. However, in the technique described in PTL 1, depending on the type and degree of disturbance, a difference may occur between the nugget diameter of the resistance spot welded joint actually obtained in the actual welding and the target diameter (hereinafter also referred to as nugget diameter deviation). From the perspective of further improving product precision, improvements in this area are currently desired.

The present disclosure has been developed in view of the aforementioned circumstances, and it is an object thereof to provide a method of producing a resistance spot welded joint that can reduce the nugget diameter deviation regardless of the type and degree of disturbance and can stably obtain a nugget of the target diameter (hereinafter also referred to as having superior nugget diameter stability). Hereinafter, any numerical range expressed using "to" means a range that includes the numerical values before and after "to" as the lower limit value and the upper limit value, respectively.

### (Solution to Problem)

We conducted intensive studies to solve the technical problems outlined above. First, we considered that test welding could be performed with a larger number of patterns (welding conditions) in accordance with the technique described in PTL 1, and the optimal pattern could be selected from among them to perform adaptive control welding, thereby reducing the nugget diameter deviation. Specifically, we considered that the time variation curve of the instantaneous amount of heat generated per unit volume and the cumulative amount of heat generated per unit volume (hereinafter also referred to as the time variation curve and the like) obtained under conditions closer to the state of a disturbance in the actual welding could be selected as the target for the main current passage in the actual welding. For example, assuming that the disturbance is a sheet gap between metal sheets, we could simulate sheet gaps with different disturbance intensities, such as 1.0 mm, 1.5 mm, and 2.0 mm, and perform test welding for each. Next, the difference between an electrical property between the electrodes during preliminary current passage in the actual welding and the electrical property between the electrodes during preliminary current passage in each test welding could be compared, and the test welding pattern that minimizes this difference could be selected (hereinafter also referred to as a comparison of the electrical property between the electrodes during preliminary current passage). Next, the time variation curve and the like in the main current passage, stored in the selected test welding, could be set as the target, and the main current passage in the actual welding could be performed by adaptive control welding. We thought that this could reduce the nugget diameter deviation.

Based on the above idea, we conducted various experiments and studies. However, even when test welding was performed with a larger number of patterns simulating disturbances of varying intensities, it was sometimes not possible to sufficiently reduce the nugget diameter deviation.

Therefore, we conducted further experiments and studies. As a result, we found that by reducing the electrode force during preliminary current passage of test welding, particularly to less than 2.5 kN, the nugget diameter deviation can be stably reduced.

The reasons for this are considered to be as follows. When the disturbance conditions are similar, for example, when the same type of disturbance occurs but only the intensity differs, the electrical property between the electrodes obtained during preliminary current passage will be similar. In particular, this tendency becomes pronounced when the electrode force during preliminary current passage increases. Therefore, in the above-described comparison of the electrical property between the electrodes during preliminary current passage, the time variation curve and the like of a test welding conducted under conditions close to the degree of disturbance in the actual welding is not necessarily selected as the target for the main current passage in the actual welding. As a result, a nugget diameter deviation occurs. In this regard, reducing the electrode force during preliminary current passage, particularly setting the electrode force to less than 2.5 kN, allows the intensity of the disturbance to be reflected in the electrical characteristics between the electrodes during preliminary current passage, preferably in the integral value of the resistance between electrodes. This improves the accuracy of selecting the optimal target for the main current passage of the actual welding from the time variation curve and the like of the test welding, i.e., the time variation curve obtained under conditions similar to the disturbance in the actual welding (hereinafter also referred to as the accuracy of selecting the target in the actual welding). As a result, the nugget diameter deviation can be stably reduced, and a nugget of the target diameter can be stably obtained.

The present disclosure is based on these discoveries and further studies. The primary features of the present disclosure are as follows.
1. A method of producing a resistance spot welded joint by squeezing, by a pair of electrodes, parts to be welded which are a plurality of overlapping metal sheets, and passing a current while applying an electrode force to join the parts to be welded and obtain a resistance spot welded joint, the method comprising:
   performing test welding; and
   performing actual welding after the test welding, wherein
   the test welding is performed in each of two or more patterns,
   in the test welding, for each pattern,
      preliminary current passage is performed by constant current control under a same current passage condition and the electrode force of less than 2.5 kN, and an electrical property between the electrodes in the preliminary current passage is stored;
      thereafter main current passage is performed by constant current control, and a time variation curve of an instantaneous amount of heat generated per unit volume and a cumulative amount of heat generated per unit volume at which a nugget of a target diameter is formed are stored, and
   in the actual welding:
      preliminary current passage is performed by constant current control under the same current passage condition as in the preliminary current passage of the test welding, an electrical property between the electrodes in the preliminary current passage of the actual welding and an electrical property between the electrodes stored in the preliminary current passage of the test welding are compared for each of the patterns, and a time variation curve of an instantaneous amount of heat generated per unit volume and a cumulative amount of heat generated per unit volume in the main current passage of the test welding that are stored for a pattern corresponding to a smallest difference in electrical property are set as a target in main current passage in the actual welding; and
      thereafter adaptive control welding is performed to control a current passage amount according to the target, as the main current passage.
2. The method of producing a resistance spot welded joint according to 1, wherein in the adaptive control welding, welding is performed taking, as a reference, the time variation curve of the instantaneous amount of heat generated per unit volume and the cumulative amount of heat generated per unit volume that were set as the target, and in a case in which an amount of time variation of an instantaneous amount of heat generated per unit volume differs from the time variation curve that is the reference, the current passage amount is controlled in order to compensate for the difference from the time variation curve within a remaining welding time so that a cumulative amount of heat generated per unit volume in the main current passage in the actual welding matches the cumulative amount of heat generated per unit volume set as the target.
3. The method of producing a resistance spot welded joint according to 1 or 2, wherein the electrical property between the electrodes is an integral value of resistance between electrodes.
4. The method of producing a resistance spot welded joint according to any one of 1 to 3, wherein in the test welding, welding is performed by simulating a same type of disturbance in two or more patterns.
5. The method of producing a resistance spot welded joint according to 4, wherein the same type of disturbance is a sheet gap.

### (Advantageous Effect)

According to the present disclosure, regardless of the type or degree of disturbance, the nugget diameter deviation can be reduced, and a nugget of the target diameter can be obtained stably. In particular, according to the present disclosure, it is also possible to obtain a nugget of the target diameter by effectively responding to variations in the disturbance state when welding parts to be welded that are conveyed one after another in real operation such as vehicle manufacturing (when the disturbance state varies among welding positions or parts to be welded). This is also highly advantageous in improving product accuracy.

### DETAILED DESCRIPTION

The present disclosure is described below based on embodiments. Any welding device that includes a pair of upper and lower electrodes and is capable of freely controlling each of the electrode force and the welding current during welding may be used in the method of producing a resistance spot welded joint according to an embodiment of the present disclosure. The force mechanism (air cylinder, servomotor, etc.), the type (stationary, robot gun, etc.), the electrode shape, and the like are not particularly limited. Furthermore, a storage device for storing the time variation curve and the like may be included.

First, the test welding and the actual welding in the method of producing a resistance spot welded joint according an embodiment of the present disclosure will be described below.

### · Test welding

Test welding is performed in two or more patterns. Test welding is preferably performed in three or more patterns. In particular, during the test welding, welding is performed by simulating the same type of disturbance using two or more patterns. Welding is more preferably performed by simulating the same type of disturbance using three or more patterns. In this case, it is understood that the intensity of the disturbance (for example, if the type of disturbance is a sheet gap, the magnitude of the sheet gap) will differ for each pattern. Examples of the type of disturbance include sheet gap, clearance, inclined angle, and misalignment. The method of producing a resistance spot welded joint according to an embodiment of the present disclosure is particularly effective for sheet gaps. No particular upper limit is placed on the number of patterns in the test welding. The number of patterns in the test welding is preferably five or fewer, for example, from the perspective of efficiency.

Here, the sheet gap refers to the gap (distance between the mating surfaces) between two metal sheets that are parts to be welded (before force is applied by the electrodes). In this case, the test welding is preferably performed in a plurality of patterns in which the sheet gap is varied within the range of 0 mm (no sheet gap) to 3.0 mm, such as a state (intensity of the disturbance) with no sheet gap, a sheet gap of 1.0 mm, a sheet gap of 2.0 mm, and a sheet gap of 3.0 mm. Furthermore, the variation in sheet gap for each test welding pattern may or may not be constant. The same applies below. Furthermore, if the parts to be welded include three or more overlapping metal sheets, the sheet gap between metal sheets that is expected to occur during actual welding (the actual welding process) may be simulated in the test welding. In this case, for example, a sheet gap between the outermost sheet (the metal sheet placed on the outermost side of the parts to be welded) and the metal sheet adjacent to the outermost sheet may be simulated.

The clearance refers to the gap between an electrode and a metal sheet (the distance between the opposite electrode and the metal sheet at the time when one electrode first makes contact with the metal sheet during welding). In this case, the test welding is preferably performed in a plurality of patterns in which the clearance is varied within the range of 0 mm (no clearance) to 3.0 mm, such as a state (intensity of the disturbance) with no clearance, a clearance of 1.0 mm, a clearance of 2.0 mm, and a clearance of 3.0 mm.

The inclined angle is the inclination of the electrode relative to the direction perpendicular to the surface of the metal sheet. In this case, the test welding is preferably performed in a plurality of patterns in which the inclined angle is varied within the range of 0 degrees (no inclined angle) to 10 degrees, such as a state (intensity of the disturbance) with no inclined angle, an inclined angle of 1 degree, an inclined angle of 5 degrees, and an inclined angle of 10 degrees.

Misalignment refers to the distance between contact point 1 and contact point 2 in a plane when contact point 1 and contact point 2 are projected onto the same plane (a plane parallel to the surface of the metal sheet) as viewed in a direction perpendicular to the metal sheet. Here, contact point 1 is the contact point between one electrode and the surface of the metal sheet. Contact point 2 is the contact point between the other electrode and the surface of the metal sheet. In this case, the test welding is preferably performed in a plurality of patterns in which the misalignment is varied within the range of 0 mm (no misalignment) to 2.0 mm, such as a state (intensity of the disturbance) with no misalignment, a misalignment of 1.0 mm, a misalignment of 1.5 mm, and a misalignment of 2.0 mm.

In addition, test welding may involve a combination of a pattern for performing welding while simulating a state with a disturbance and a pattern for performing welding while simulating a state with no disturbance. Furthermore, patterns simulating different types of disturbances may be combined, for example, a sheet gap and misalignment.

Furthermore, during test welding, preliminary current passage and main current passage are performed for each pattern as follows.

### (Preliminary current passage of test welding)

The preliminary current passage of test welding is performed by constant current control. An electrical property between the electrodes during the preliminary current passage is then stored in memory. In the method of producing a resistance spot welded joint according to an embodiment of the present disclosure, it is extremely important to control the electrode force (set electrode force) during preliminary current passage of test welding as follows.

### Electrode force: Less than 2.5 kN

As described above, reducing the electrode force during preliminary current passage of the test welding is effective in improving the accuracy of target selection in the actual welding and obtaining superior nugget diameter stability. Therefore, the electrode force during preliminary current passage of the test welding is less than 2.5 kN. The electrode force is preferably 2.0 kN or less. The electrode force is more preferably 1.5 kN or less. No particular lower limit is placed on the electrode force during the preliminary current passage of test welding. For example, the electrode force during the preliminary current passage of test welding is preferably 1.0 kN or more.

Aside from the electrode force, no particular limitations are placed on the current passage conditions during preliminary current passage of test welding, as long as constant current control is used. For example, the current value I1 in the preliminary current passage of test welding is preferably in the range of 1 kA to 2 kA. The welding time T1 during preliminary current passage of test welding is preferably in the range of 20 ms to 100 ms.

The target for the main current passage of the actual welding is determined by comparing an electrical property between the electrodes in the preliminary current passage stored for each pattern in the test welding. Therefore, the current passage conditions during preliminary current passage in test welding (electrode force, welding current value (hereinafter also simply referred to as current value), and welding time) are the same for all patterns. In other words, "in the test welding, preliminary current passage is performed by constant current control under the same current passage conditions for each pattern" means that for all patterns of test welding, preliminary current passage by constant current control is performed with the same electrode force, current value, and welding time. However, an error of approximately 5 % is acceptable for the electrode force, current value, and welding time. Furthermore, even if errors occur, the electrode force must be less than 2.5 kN.

The electrical property between the electrodes refers to the integral value of the resistance between electrodes or the integral value of the voltage between electrodes. In particular, from the perspective of improving the accuracy of target selection in the actual welding, the electrical property between the electrodes is preferably the integral value of the resistance between electrodes (for example, the integral value of the resistance between electrodes at the end of the preliminary current passage).

### (Main current passage of test welding)

During the test welding, preliminary current passage is performed for each pattern, followed by main current passage. During the main current passage of the test welding, current passage is performed by constant current control, and a time variation curve of an instantaneous amount of heat generated per unit volume and a cumulative amount of heat generated per unit volume at which a nugget of a target diameter is formed are stored.

The current passage conditions in the main current passage of test welding are not particularly limited, as long as constant current control is used and a nugget of the target diameter is obtained. For example, the current value I2 during the main current passage of test welding is preferably in the range of 3 kA to 9 kA. Furthermore, the relationship I1 < I2 is preferably satisfied. The welding time T2 during main current passage of test welding is preferably in the range of 20 ms to 300 ms. The electrode force during the main current passage of test welding is preferably in the range of 3 kN to 7 kN. Furthermore, a cooling time may be provided between the preliminary current passage and main current passage of test welding. In addition, the current passage conditions (electrode force, current value, and welding time) during the main current passage of the test welding do not need to be the same for all patterns.

Furthermore, the target diameter of the nugget can be set based on the required specifications and the like, but the target diameter is preferably selected from the range of 3.0√t to 6.0√t. The target diameter is more preferably selected from the range of 4.0√t to 5.0√t. Here, t is the thickness (mm) of the thinnest metal sheet among the parts to be welded.

Test welding patterns other than those described above are not particularly limited. The test welding pattern can be set by, for example, conducting preliminary welding tests in advance (specifically, by using the same type and thickness of parts to be welded as the actual parts to be used and performing welding under various conditions by constant current control, either under conditions simulating the aforementioned disturbances or in the absence of disturbances).

### · Actual welding

After the test welding, the actual welding is performed. During the actual welding, preliminary current passage and main current passage are performed as follows.

### (Preliminary current passage of actual welding)

In the actual welding, preliminary current passage is first performed by constant current control under the same current passage conditions as the test welding. Then, an electrical property between the electrodes in the preliminary current passage and an electrical property between the electrodes stored in the preliminary current passage of the test welding are compared for each of the patterns, and the time variation curve and the like in the main current passage of the test welding that are stored for a pattern corresponding to the smallest difference in electrical property are set as a target in the main current passage in the actual welding.

In addition, "performing preliminary current passage by constant current control under the same current passage conditions as the preliminary current passage of test welding" means that the electrode force, current value, and welding time are the same as the electrode force, current value, and welding time during the preliminary current passage of test welding, and that the preliminary current passage of the actual welding is performed by constant current control. However, an error of approximately 5 % is acceptable for the electrode force, current value, and welding time.

### (Main current passage of actual welding)

Thereafter, as the main current passage, adaptive control welding is performed to control the current passage amount according to the target set after the aforementioned preliminary current passage. For example, in the adaptive control welding of the main current passage, welding is performed taking, as a reference, the time variation curve of the instantaneous amount of heat generated per unit volume and the cumulative amount of heat generated per unit volume that were set as the target after the aforementioned preliminary current passage. If the amount of time variation of the instantaneous amount of heat generated per unit volume follows the time variation curve, the welding is continued without change and completed. If the amount of time variation of the instantaneous amount of heat generated per unit volume differs from the time variation curve, the current passage amount is controlled in order to compensate for the difference within a remaining welding time so that the cumulative amount of heat generated per unit volume in the main current passage of actual welding matches the cumulative amount of heat generated per unit volume set as the target. The adaptive control welding can be performed by, for example, using a control unit that directly measures or calculates changes in the current value, voltage between electrodes, resistance between electrodes, and amount of heat generated during welding as electrical signals, and controls input parameters such as current value and voltage between electrodes based on these values.

The amount of heat generated can, for example, be calculated from an electrical property between the electrodes. No particular limitations are placed on the method of calculating the amount of heat generated, but for example, the method disclosed in JP H11-33743 A can be used. The following is the procedure of calculating the amount q of heat generated per unit volume and per unit time and the cumulative amount Q of heat generated per unit volume according to this method.

Let t' be the total thickness of the parts to be welded, r be the electrical resistivity of the parts to be welded, V be the voltage between electrodes, I be the current value, and S be the contact area of the electrodes and the parts to be welded. In this case, the welding current passes through a columnar portion, whose cross-sectional area is S and thickness is t', to generate heat by resistance. The amount q of heat generated per unit volume and per unit time in the columnar portion is given by the following Equation (1): $q = \left(V⋅I\right) / \left(S⋅t′\right)$ (1).

The electrical resistance R of the columnar portion is given by the following Equation (2): $R = \left(r⋅t′\right) / S$ (2).

Solving Equation (2) for S and substituting the solution into Equation (1) yields the amount q of heat generated as indicated by the following Equation (3): $q = \left(V⋅I⋅R\right) / \left(r⋅t{′}^{2}\right) = \left({V}^{2}\right) / \left(r⋅t{′}^{2}\right)$ (3).

As is clear from Equation (3), the amount q of heat generated per unit volume and per unit time can be calculated from the voltage V between the electrodes, the total thickness t' of the parts to be welded, and the electrical resistivity r of the parts to be welded, and is not affected by the contact area S of the electrodes and the parts to be welded. Although the amount of heat generated is calculated from the voltage V between the electrodes in Equation (3), the amount q of heat generated may be calculated from the current value I. The contact area S of the electrodes and the parts to be welded need not be used in this case, either. Accumulating the amount q of heat generated per unit volume and unit time over the entire welding time yields the cumulative amount Q of heat generated per unit volume. As is clear from Equation (3), this cumulative amount Q of heat generated per unit volume can also be calculated without using the area S of contact between the electrodes and the parts to be welded. It is to be understood that other calculation formulas may also be used.

The parts to be welded that are used are not limited. The present method may be applied to welding of steel sheets and coated or plated steel sheets having various strengths, from mild steel to ultra-high tensile strength steel sheets, and to welding of light metal sheets of aluminum alloys and the like. The present method may be applied to a sheet combination of three or more overlapping steel sheets. In addition, a steel sheet having a coated or plated layer on the surface that comes into contact with the electrode may be used.

Conditions other than those described above are not particularly limited, and a conventional method may be used.

### EXAMPLES

For the two-layer sheet combination or the three-layer sheet combination (metal sheet 1, metal sheet 2, and metal sheet 3 stacked in that order) illustrated in Table 1, test welding was performed under the set of conditions illustrated in Table 2 and actual welding under the set of conditions illustrated in Table 3 to produce a resistance spot welded joint. In the coating or plating column of Table 1, items without a description are steel sheets without coating or plating, whereas GA indicates a galvannealed steel sheet. Furthermore, the cycle as the unit of welding time in Table 2 refers to a cycle at 50 Hz. At 50 Hz, one cycle is 20 ms. Thus, 16 cycles is 320 ms, for example.

In the test welding, preliminary current passage was performed in each pattern by constant current control under the same current passage conditions, and the integral value of the resistance between electrodes during this preliminary current passage was stored. Thereafter, main current passage was performed by constant current control, and the time variation curve of the instantaneous amount of heat generated per unit volume and the cumulative amount of heat generated per unit volume at which a nugget of the target diameter is formed was stored. The target diameter of the nugget was set to 4.0√t in all cases.

In the actual welding, preliminary current passage was performed by constant current control under the same current passage conditions as the test welding. The integral value of the resistance between electrodes in the preliminary current passage of the actual welding and the integral value of the resistance between electrodes stored in the preliminary current passage of the test welding were compared for each of the patterns, and the time variation curve of the instantaneous amount of heat generated per unit volume and the cumulative amount of heat generated per unit volume in the main current passage that were stored for a pattern corresponding to the smallest difference in integral value were set as a target in main current passage in the actual welding. During the main current passage of the actual welding, adaptive control welding was then performed to control the current passage amount according to the target.

The nugget diameter stability was then evaluated according to the following procedure.

### [Evaluation of nugget diameter stability]

For each produced joint, the welded portion was cut, and the cross-section was etched. Next, the cross-section of each joint was observed using optical microscopy, and the diameter of the nugget formed between the metal sheets was measured. The nugget diameter stability was then evaluated according to the following criteria. The evaluation results are listed in Table 3. Pass A (excellent): nugget diameter deviation within 0.1√t in all cases, regardless of the intensity of the disturbance during actual welding Pass B (very good): nugget diameter deviation within 0.3√t in all cases (except pass A), regardless of the intensity of the disturbance during actual welding Pass C (good): nugget diameter deviation within 0.5√t in all cases (except pass A and pass B), regardless of the intensity of the disturbance during actual welding
Failure (poor): nugget diameter deviation exceeding 0.5√t in all cases, relative to the intensity of at least one disturbance during actual welding

The nugget diameter deviation can also be defined as the absolute value of the difference between the nugget diameter (mm) of the joint obtained in the actual welding and the target diameter (mm).

**Table 1**

| Sheet combination No. | Metal sheet 1 | | | Metal sheet 2 | | | Metal sheet 3 | | |
|---|---|---|---|---|---|---|---|---|---|
| | TS (MPa) | Thickness [mm] | Coating or plating | TS (MPa) | Thickness [mm] | Coating or plating | TS (MPa) | Thickness [mm] | Coating or plating |
| 1 | 980 | 1.6 | | 980 | 1.6 | | | | |
| 2 | 1800 | 1.6 | | 1800 | 1.6 | | 980 | 1.0 | GA |

**Table 2**

| Test welding No. | Test welding | | | | | | | | | | Remarks |
|---|---|---|---|---|---|---|---|---|---|---|---|
| | Sheet combination No. | Pattern | Type of simulated disturbance | Intensity of simulated disturbance | Preliminary current passage | | | Main current passage | | | |
| | | | | | Electrode force (kN) | Current value (kA) | Current passage time (cycle) | Electrode force (kN) | Current value (kA) | Current passage time (cycle) | |
| 1 | 1 | 1 | sheet gap | 1.0 mm | 1.5 | 2.0 | 5.0 | 3.0 | 6.5 | 16.0 | Example |
| | | 2 | sheet gap | 2.0 mm | | | | 5.0 | 7.5 | 16.0 | |
| 2 | 1 | 1 | sheet gap | 1.0 mm | 2.0 | 2.0 | 5.0 | 5.0 | 7.5 | 16.0 | Example |
| | | 2 | sheet gap | 2.0 mm | | | | 6.0 | 8.0 | 16.0 | |
| 3 | 2 | 1 | none | - | 1.5 | 2.0 | 5.0 | 5.0 | 7.5 | 16.0 | Example |
| | | 2 | sheet gap | 1.0 mm | | | | 5.0 | 7.5 | 16.0 | |
| | | 3 | sheet gap | 2.0 mm | | | | 6.0 | 7.5 | 16.0 | |
| | | 4 | sheet gap | 3.0 mm | | | | 6.0 | 8.0 | 16.0 | |
| 4 | 1 | 1 | sheet gap | 1.0 mm | 3.0 | 2.0 | 5.0 | 5.0 | 7.5 | 16.0 | Comparative Example |
| | | 2 | sheet gap | 2.0 mm | | | | 6.0 | 8.0 | 16.0 | |
| 5 | 2 | 1 | none | - | 3.0 | 2.0 | 5.0 | 5.0 | 7.5 | 16.0 | Comparative Example |
| | | 2 | sheet gap | 1.0 mm | | | | 5.0 | 7.5 | 16.0 | |
| | | 3 | sheet gap | 2.0 mm | | | | 6.0 | 7.5 | 16.0 | |
| | | 4 | sheet gap | 3.0 mm | | | | 6.0 | 8.0 | 16.0 | |

### [Table 3]

**Table 3**

| No. | Test welding No. | Actual welding | | | | Evaluation of nugget diameter stability | Remarks |
|---|---|---|---|---|---|---|---|
| | | Sheet combination No. | Type of simulated disturbance | Intensity of simulated disturbance | Pattern of test welding set to target value for main current passage of actual welding | | |
| 1 | 1 | 1 | sheet gap | 2.5 mm | 2 | pass B | Example |
| | | | sheet gap | 2.0 mm | 2 | | |
| | | | sheet gap | 1.5 mm | 2 | | |
| | | | sheet gap | 1.0 mm | 1 | | |
| | | | sheet gap | 0.5 mm | 1 | | |
| 2 | 2 | 1 | sheet gap | 2.5 mm | 2 | pass C | Example |
| | | | sheet gap | 2.0 mm | 2 | | |
| | | | sheet gap | 1.5 mm | 2 | | |
| | | | sheet gap | 1.0 mm | 1 | | |
| | | | sheet gap | 0.5 mm | 1 | | |
| 3 | 3 | 2 | sheet gap | 2.5 mm | 4 | pass A | Example |
| | | | sheet gap | 2.0 mm | 3 | | |
| | | | sheet gap | 1.5 mm | 2 | | |
| | | | sheet gap | 1.0 mm | 2 | | |
| | | | sheet gap | 0.5 mm | 1 | | |
| 4 | 4 | 1 | sheet gap | 2.5 mm | 2 | fail | Comparative Example |
| | | | sheet gap | 2.0 mm | 2 | | |
| | | | sheet gap | 1.5 mm | 1 | | |
| | | | sheet gap | 1.0 mm | 1 | | |
| | | | sheet gap | 0.5 mm | 1 | | |
| 5 | 5 | 2 | sheet gap | 2.5 mm | 3 | fail | Comparative Example |
| | | | sheet gap | 2.0 mm | 3 | | |
| | | | sheet gap | 1.5 mm | 3 | | |
| | | | sheet gap | 1.0 mm | 2 | | |
| | | | sheet gap | 0.5 mm | 1 | | |

In all of the Examples according to the present disclosure, superior nugget diameter stability was achieved. On the other hand, in the Comparative Examples, the nugget diameter stability was insufficient.

## Claims

1. A method of producing a resistance spot welded joint by squeezing, by a pair of electrodes, parts to be welded which are a plurality of overlapping metal sheets, and passing a current while applying an electrode force to join the parts to be welded and obtain a resistance spot welded joint, the method comprising:
performing test welding; and
performing actual welding after the test welding, wherein
the test welding is performed in each of two or more patterns,
in the test welding, for each pattern,
preliminary current passage is performed by constant current control under a same current passage condition and the electrode force of less than 2.5 kN, and an electrical property between the electrodes in the preliminary current passage is stored;
thereafter main current passage is performed by constant current control, and a time variation curve of an instantaneous amount of heat generated per unit volume and a cumulative amount of heat generated per unit volume at which a nugget of a target diameter is formed are stored, and
in the actual welding:
preliminary current passage is performed by constant current control under the same current passage condition as in the preliminary current passage of the test welding, an electrical property between the electrodes in the preliminary current passage of the actual welding and an electrical property between the electrodes stored in the preliminary current passage of the test welding are compared for each of the patterns, and a time variation curve of an instantaneous amount of heat generated per unit volume and a cumulative amount of heat generated per unit volume in the main current passage of the test welding that are stored for a pattern corresponding to a smallest difference in electrical property are set as a target in main current passage in the actual welding; and
thereafter adaptive control welding is performed to control a current passage amount according to the target, as the main current passage.

2. The method of producing a resistance spot welded joint according to claim 1, wherein in the adaptive control welding, welding is performed taking, as a reference, the time variation curve of the instantaneous amount of heat generated per unit volume and the cumulative amount of heat generated per unit volume that were set as the target, and in a case in which an amount of time variation of an instantaneous amount of heat generated per unit volume differs from the time variation curve that is the reference, the current passage amount is controlled in order to compensate for the difference from the time variation curve within a remaining welding time so that a cumulative amount of heat generated per unit volume in the main current passage in the actual welding matches the cumulative amount of heat generated per unit volume set as the target.

3. The method of producing a resistance spot welded joint according to claim 1, wherein the electrical property between the electrodes is an integral value of resistance between electrodes.

4. The method of producing a resistance spot welded joint according to claim 2, wherein the electrical property between the electrodes is an integral value of resistance between electrodes.

5. The method of producing a resistance spot welded joint according to any one of claim 1 to 4, wherein in the test welding, welding is performed by simulating a same type of disturbance in two or more patterns.

6. The method of producing a resistance spot welded joint according to claim 5, wherein the same type of disturbance is a sheet gap.
